# EUROPÄISCHE PATENTANMELDUNG

(11) **EP 4 019 435 A1**
(43) Veröffentlichungstag der Anmeldung: **29.06.2022**
(21) Anmeldenummer: 21214057.8
(22) Anmeldetag: 13.12.2021
(51) Int. Cl.: B65G 15/34, B65G 23/04, B65G 43/06, B65G 43/02

(54) **VERFAHREN ZUM BETRIEB EINER FÖRDERBANDANLAGE**

(30) Priorität: 22.12.2020 DE 102020216501
(71) Anmelder: ContiTech Transportbandsysteme GmbH, 30165 Hannover (DE)
(72) Erfinder: Raffler, Patrick, 30165 Hannover (DE); Schiller, Dustin, 30165 Hannover (DE); Wennekamp, Tobias, 30165 Hannover (DE)
(74) Vertreter: Continental Corporation

(57) **Zusammenfassung**

Die vorliegende Erfindung betrifft ein Verfahren zum Betrieb einer Förderbandanlage (1) mit einem Förderband (10), welches ein elastomeres Material aufweist, in welches wenigstens in einer Förderrichtung (A) verlaufende Zugträger (11) eingebettet sind, und mit wenigstens einer Antriebstrommel (12), welche ausgebildet ist, das Förder-band (10) in der Förderrichtung (A) anzutreiben, mit wenigstens den Schritten:
• Erfassen (100) eines Leistungsbedarfs der Antriebstrommel (12),
• Vergleichen (400) des aktuellen Leistungsbedarfs der Antriebstrommel (12) mit einem vorbestimmten Leistungsbedarf und
• bei Überschreiten eines vorbestimmten Schwellwerts, Anhalten (500) der Antriebstrommel (12).

## Beschreibung

Die vorliegende Erfindung betrifft ein Verfahren zum Betrieb einer Förderbandanlage gemäß dem Patentanspruch 1, eine Förderbandanlage gemäß dem Patentanspruch 6sowie eine Steuerungseinheit zur Durchführung eines derartigen Verfahrens gemäß dem Patentanspruch 7.

Zum Transport von insbesondere losem Fördergut wie zum Beispiel Schüttgut wie zum Beispiel in Form von Steinen, Erz, Kohle, Getreide, Granulat und dergleichen im Bergbau, in der Industrie und auf den Transportwegen werden häufig Förderbänder eingesetzt, welche auch als Transportbänder bezeichnet werden können. Derartige Förderbänder werden endlos geschlossen in einer Förderbandanlage bzw. in einer Transportbandanlage verwendet. Die Förderbänder bestehen üblicherweise zumindest im Wesentlichen aus einem flexiblen Material wie zum Beispiel aus einem elastomeren Material wie zum Beispiel aus vulkanisiertem Kautschuk, auch Gummi genannt, in welches in der Zugrichtung, Transportrichtung bzw. Bewegungsrichtung verlaufend Zugträger bzw. Festigkeitsträger zur Übertragung der Zugkräfte eingebettet sind. Derartige Zugträger können bei Förderbändern sein, welche vergleichsweise große bzw. schwere Lasten zu fördern haben, insbesondere Stahlseile sein.

Ebenso sind Förderbänder bekannt, welche für kleinere Anwendungen geeignet sind und textile Flächengebilde als Zugträger aufweisen. Derartige Anwendungen können ebenfalls lose Fördergüter fördern.

In jedem Fall erstrecken sich derartige Förderanlagen, welche auch als Förderer bezeichnet werden können, üblicherweise zumindest im Wesentlichen in der horizontalen Ebene, sodass die einzelnen Komponenten bzw. Anlagenteile der Förderanlage auf einem Untergrund angeordnet sind. Zu den Komponenten einer Förderanlage, welche auch als Anlagenteile bezeichnet werden können, gehört üblicherweise wenigstens eine Antriebstrommel, welche mittels eines Antriebs rotatorisch betrieben werden kann, und am gegenüberliegenden Ende der Förderanlage wenigstens eine Umlenkrolle. Das Förderband wird endlos geschlossen und gespannt um die Antriebstrommel und um die Umlenkrolle gelegt, sodass der obere Bereich des Förderbandes, welcher auch als Obertrum bezeichnet werden kann, mittels des Antriebs der Antriebstrommel in die eine Richtung und der untere Bereich des Förderbandes, welcher auch als Untertrum bezeichnet werden kann, in die entgegengesetzte Richtung bewegt werden kann.

Zwischen der Antriebstrommel und der Umlenkrolle werden üblicherweise zahlreiche Laufrollen angeordnet, welche das Obertrum bzw. das Untertrum des Förderbandes in der vertikalen Richtung von unten abstützen. Derartige Laufrollen können auch als Tragrollen bezeichnet werden. Üblicherweise werden beim Obertrum des Förderbandes in der Querrichtung mehrere und insbesondere drei Laufrollen nebeneinander angeordnet und dabei die äußeren Laufrollen zur horizontalen Ebene schräg gestellt. Hierdurch ergibt sich eine gemuldete Form des Obertrums des Förderbandes, sodass das lose Schüttgut in der Querrichtung seitlich in einem gewissen Maße auf der Oberfläche der Oberseite des Förderbandes gehalten werden kann.

Da derartige Fördergüter häufig spitz und scharfkantig ausgebildet sind, können diese Fördergüter beim Transport und insbesondere durch ihr Aufschlagen auf der Oberfläche der Oberseite des Förderbandes an dessen Aufgabestelle dort zu Beschädigungen des flexiblen Materials des Förderbandes führen. Hierdurch kann das elastomere Material des Förderbandes punktuell abgetragen und hierdurch geschwächt werden. Es kann sogar zu Durchbrüchen bis zur Unterseite des Förderbandes kommen. Zunehmende Beschädigungen können dabei bis zu den Zugträgern reichen und auch diese beschädigen. Durch derartige Beschädigungen können auch die Zugträger in der Längsrichtung durchtrennt werden. Auch können die Zugträger als Stahlseile durch Korrosion beschädigt werden, wenn das flexible Material die Zugträger nicht mehr vor äußeren Einflüssen wie zum Beispiel Witterungseinflüssen wie zum Beispiel vor Feuchtigkeit schützen kann. Vergleichbares gilt für textile Zugträger.

Derartige Beschädigungen können zum Beispiel durch ein Zerreißen des Förderbands in der Querrichtung und bzw. oder durch sich in der Längsrichtung erstreckende Schlitze durch das flexible Material des Förderbandes hindurch zu einem Ausfall der Förderanlage führen. Dies kann zu einem Verlust des Fördergutes, welches sich zu diesem Zeitpunkt auf dem Obertrum des Förderbandes befindet, sowie zu entsprechenden Umweltschäden führen. Auch kann die Anschaffung und Montage eines neuen Förderbandes Aufwand und Kosten verursachen. Insbesondere können aber durch den Stillstand der Förderanlage und gegebenenfalls ein hierdurch verursachten Stillstand zum Beispiel der gesamten Mine, der gesamten Produktionsanlage, des gesamten Hafenterminals, des gesamten Güterbahnhofs und dergleichen sehr hohe Kosten durch den Ausfall der entsprechenden Produktions- bzw. Transportkapazitäten entstehen. Zu beachten ist ferner, dass derartige Förderbänder üblicherweise über einen längeren Zeitraum segmentweise hergestellt, an den Einsatzort transportiert und dort endlos geschlossen werden müssen, was einen entsprechenden zeitlichen Vorlauf bzw. Zeitbedarf erfordert.

Zur Überwachung derartige Förderbänder auf Beschädigungen und insbesondere auf Längsschlitze ist es daher bekannt, Verfahren und Vorrichtungen zur Überwachung zu verwenden, welche selbsttätig und möglichst frühzeitig eine derartige Beschädigung und insbesondere einen Längsschlitz erkennen und zum Beispiel durch ein Anhalten des Förderbandes hierauf reagieren können, um weitere Beschädigungen bzw. eine Vergrößerung der Beschädigung zu vermeiden.

Hierzu können Leiterschleifen, Transponder und dergleichen in die Deckplatte des Förderbandes eingebettet und von außerhalb des Förderbandes seitens der Förderbandanlage detektiert werden. Aus der Abwesenheit einer erwarteten Leiterschleife kann dann auf eine Beschädigung an dieser Stelle geschlossen werden. Derartige Vorrichtungen und Verfahren sind beispielsweise aus der DE 196 43 997 A1, aus der DE 197 21 916 A1, aus der DE 199 02 508 A1 oder aus der EP 0 753 472 A1 bekannt.

Nachteilig an der Verwendung von Leiterschleifen, Transponder und dergleichen wie zuvor beschrieben ist, dass diese Bauteile in die Deckschicht bzw. in die Deckplatte des Förderbandes eingebettet und dort vulkanisiert werden müssen. Aufgrund der Größe dieser Bauteile ist hierzu üblicherweise eine minimale Dicke von ca. 5 mm bis ca. 6 mm der Deckplatte erforderlich, um die Bauteile dort vollständig einbetten zu können. Somit können derartige Vorrichtungen und Verfahren nicht bei Förderbändern angewendet werden, welche vergleichsweise dünne Deckplatten besitzen. Derartige Förderbänder können somit auf diese Art und Weise nicht auf Beschädigungen und insbesondere auf Längsschlitze wie zuvor beschrieben überwacht werden.

Ein weiterer Nachteil bei der Verwendung von Leiterschleifen allgemein ist, dass diese je nach Betriebsbedingungen nur eine begrenzte Lebensdauer haben, so dass nach einer gewissen Zeit die Leiterschleifen ausgetauscht werden müssen oder nicht mehr zur Überwachung verwendet werden können, d.h. auch ohne Beschädigungen nicht mehr detektiert werden können.

Eine Aufgabe der vorliegenden Erfindung ist es, ein Verfahren und bzw. oder eine Vorrichtung zur Überwachung einer Förderanlage, insbesondere mit vergleichsweise dünnen Förderbändern, bereitzustellen. Insbesondere soll die Überwachung des Förderbandes auf Längsschlitze ermöglicht werden. Insbesondere soll die Überwachung des Förderbandes möglichst einfach, kostengünstig, bauraumsparend und bzw. oder langlebig erfolgen können. Zumindest soll eine Alternative zu bekannten Möglichkeiten zur Überwachung von Förderanlagen, insbesondere mit vergleichsweise dünnen Förderbändern, bereitgestellt werden.

Die Aufgabe wird erfindungsgemäß durch ein Verfahren mit den Merkmalen gemäß Patentanspruch 1, durch eine Förderbandanlage mit den Merkmalen gemäß Patentanspruchs 6 sowie durch eine Steuerungseinheit mit den Merkmalen gemäß Anspruch 7 gelöst. Vorteilhafte Weiterbildungen sind in den Unteransprüchen beschrieben.

Somit betrifft die vorliegende Erfindung ein Verfahren zum Betrieb einer Förderbandanlage mit einem Förderband, welches ein elastomeres Material aufweist, in welches wenigstens in einer Förderrichtung verlaufende Zugträger eingebettet sind, und mit wenigstens einer Antriebstrommel, welche ausgebildet ist, das Förderband in der Förderrichtung anzutreiben, mit wenigstens den Schritten:
- Erfassen eines Leistungsbedarfs der Antriebstrommel,
- Vergleichen des aktuellen Leistungsbedarfs der Antriebstrommel mit einem vorbestimmten Leistungsbedarf und
- bei Überschreiten eines vorbestimmten Schwellwerts, Anhalten der Antriebstrommel.

Das Förderband kann als elastomeres Material insbesondere vulkanisierten Kautschuk aufweisen, in welchen in der Längsrichtung als Zugrichtung bzw. als Bewegungsrichtung die Zugträger eingebettet sind, welche auch als Festigkeitsträger bezeichnet werden können. Grundsätzlich können derartige Zugträger zum Beispiel Stahlseile und dergleichen sein. Vorzugsweise richtet sich die vorliegende Erfindung jedoch auf Förderbänder mit textilen Zugträgern zum Beispiel in Form von flächigen Geweben, welche aufgrund ihres vergleichsweise dünnen Aufbaus nicht zur Einbettung von Leiterschleifen, Transponder und dergleichen geeignet sind, wie eingangs beschrieben, und daher erfindungsgemäß auf eine alternative Art und Weise auf Beschädigungen und insbesondere auf Längsschlitze überwacht werden können.

Der vorliegenden Erfindung liegt dabei die Erkenntnis zugrunde, dass Beschädigungen des Förderbandes sowie der Förderanlage selbst den Leistungsbedarf der Antriebstrommel erhöhen können. Beispielsweise kann eine festgefahrene Tragrolle, eine beschädigte Lagerung einer Tragrolle oder dergleichen zu einem erhöhten Widerstand des Förderbandes führen, wodurch auch der Leistungsbedarf der Antriebstrommel bzw. dessen Antriebs steigen kann, was erfindungsgemäß erkannt werden kann. Ebenso kann eine Beschädigung des Förderbandes und insbesondere ein Längsschlitz des Förderbandes den Widerstand des Förderbandes in der Bewegung erhöhen, wodurch ebenfalls der Leistungsbedarf der Antriebstrommel ansteigen kann, was erfindungsgemäß erkannt werden kann. Dies kann insbesondere sprunghaft und somit sehr deutlich, einfach bzw. verlässlich erkennbar erfolgen.

Erfindungsgemäß wird daher der Leistungsbedarf der Antriebstrommel regelmäßig oder sogar fortlaufend erfasst, was durch zusätzliche Sensoren oder durch die Auswertung bereits vorhandener Größen der Antriebstrommel bzw. dessen elektrischen Antriebs erfolgen kann. In jedem Fall kann dies beispielsweise von einer Steuerungseinheit der Förderbandanlage ausgeführt werden.

Gemäß dieses erfindungsgemäßen Verfahrens kann der aktuell erfasste Leistungsbedarf der Antriebstrommel mit einem vorbestimmten Leistungsbedarf, welcher dem beschädigungsfreien Betrieb der Förderanlage entspricht, verglichen werden. Dieser vorbestimmte Leistungsbedarf kann beispielsweise durch Berechnung bestimmt und fest vorgegeben werden. Alternativ kann der vorbestimmte Leistungsbedarf auch an der Förderanlage selbst ermittelt werden, um möglichst viele individuelle Einflussfaktoren berücksichtigen zu können. Der vorbestimmte Leistungsbedarf kann hierzu einmalig bzw. regelmäßig aber auch fortlaufend bestimmt werden, wie im Folgenden näher beschrieben werden wird.

Ebenso kann ein vorbestimmter Schwellwert bestimmt werden, welcher auch als Grenzwert bezeichnet werden kann. Der Schwellwert kann absolut oder relativ zum vorbestimmten Leistungsbedarf eine Grenze darstellen, bis zu welcher der aktuelle Leistungsbedarf der Antriebstrommel dahingehend beurteilt werden kann, dass die Förderbandanlage und bzw. oder das Förderband als beschädigungsfrei angesehen werden kann bzw. können.

Überschreitet der aktuelle Leistungsbedarf der Antriebstrommel bzw. dessen Antriebs jedoch den vorbestimmten Schwellwert des vorbestimmten Leistungsbedarfs, so kann hieraus geschlossen werden, dass der deutlich erhöhte Leistungsbedarf der Antriebstrommel bzw. dessen Antriebs aus einer Beschädigung der Förderbandanlage und bzw. oder des Förderbandes resultieren kann. Um weitere Beschädigungen zu vermeiden, kann dies zu einer selbsttätigen Abschaltung der Förderbandanlage führen. Nun kann die Förderbandanlage und insbesondere das Förderband von einer Person auf Beschädigungen kontrolliert werden.

Vorteilhaft ist hieran insbesondere, dass am Förderband selbst keinerlei Veränderungen bzw. zusätzliche Maßnahmen erforderlich sind, um die Erfindung umzusetzen. Auch seitens der Förderbandanlage bzw. dessen Steuerungseinheit ist der Aufwand minimal. Dies kann insbesondere die nachträgliche Anwendung der Erfindung auf bestehende Förderbandanlagen ermöglichen bzw. vereinfachen. Auch kann dies die Umsetzung bei vergleichsweise dünnen Förderbändern, zum Beispiel mit textilen Geweben als Zugträger, ermöglichen.

Gemäß einem Aspekt der Erfindung ist der vorbestimmte Leistungsbedarf ein Mittelwert des erfassten Leistungsbedarfs einer vorbestimmten unmittelbar zurückliegenden Zeitdauer. Auf diese Art und Weise kann ein Durchschnittswert des tatsächlichen Leistungsbedarfs der Antriebstrommel vom aktuellen Zeitpunkt an über einen gewissen Zeitraum in die Vergangenheit durch Mittelwertbildung bestimmt werden. Hierdurch können kleinere Schwankungen bzw. Messungenauigkeiten ausgeglichen werden, sodass ein repräsentativer vorbestimmter Leistungsbedarf der Antriebstrommel bestimmt werden kann. Kommt es gegenüber diesem Mittelwert zu einer Erhöhung des aktuellen Leistungsbedarfs der Antriebstrommel, welche dem vorbestimmten Schwellwert überschreitet, dies zum Abschalten der Förderbandanlage wie zuvor beschrieben führen.

Gemäß einem weiteren Aspekt der Erfindung ist der vorbestimmte Leistungsbedarf ein Mittelwert des erfassten Leistungsbedarfs einer vorbestimmten zeitversetzt zurückliegenden Zeitdauer. Auch in diesem Fall wird ein Mittelwert über den Leistungsbedarf der Antriebstrommel in der Vergangenheit gebildet, wie zuvor beschrieben. Hierbei werden jedoch in diesem Fall lediglich Messwerte betrachtet, welche innerhalb eines Zeitraums erfasst wurden, welcher gegenüber dem aktuellen Zeitpunkt zeitlich versetzt in der Vergangenheit liegt. Beispielsweise können die Werte des Leistungsbedarfs der Antriebstrommel über einen Zeitraum von 5 Minuten gemittelt werden, wobei der Zeitraum beispielsweise 10 Minuten in der Vergangenheit liegt. Hierdurch kann zum einen weiterhin ein repräsentativer vorbestimmter Leistungsbedarf der Antriebstrommel bzw. dessen Antriebs ermittelt werden, welcher die aktuellen Verhältnisse der Förderbandanlage und des Förderbandes widerspiegelt. Zum anderen kann durch den zeitlichen Versatz verhindert werden, dass eine langsam fortschreitende Beschädigung, welche zu einem sprunghaften Anstieg des Leistungsbedarfs der Antriebstrommel bzw. dessen Antriebs führen kann, in die Bestimmung des vorbestimmten Leistungsbedarfs mit einfließen kann, sodass auch eine derart langsam fortschreitende Beschädigung wie zuvor beschrieben erkannt werden kann.

In jedem Fall der Mittelwertbildung können Spitzen des aktuellen Leistungsbedarfs der Antriebstrommel, welche aus dem Anfahren des Förderbandes resultieren können, vorzugsweise erkannt und nicht in die Mittelwertbildung mit einbezogen werden, um diese nicht zu verfälschen.

Gemäß einem weiteren Aspekt der Erfindung weist die Förderbandanlage ferner einen Beladungssensor auf, welcher ausgebildet ist, eine Beladung des Förderbandes zu erfassen, das Verfahren ferner mit den Schritten:
- Erfassen einer Beladung des Förderbandes und
- Berechnen des vorbestimmten Leistungsbedarfs in Abhängigkeit der erfassten Beladung des Förderbandes.

Diesem Aspekt der Erfindung liegt die Erkenntnis zugrunde, dass der Leistungsbedarf der Antriebstrommel auch von dem Gewicht der Beladung des Förderbandes abhängen kann. Daher kann erfindungsgemäß die Beladung des Förderbandes zum Beispiel durch einen Beladungssensor erfasst werden und in die Berechnung des vorbestimmten Leistungsbedarfs mit einfließen. Dies kann die Genauigkeit des erfindungsgemäßen Verfahrens, bei Überschreiten des vorbestimmten Schwellwertes auf eine Beschädigung zu schließen, erhöhen.

Gemäß einem weiteren Aspekt der Erfindung weisen die Zugträger ein textiles Material auf, bestehen vorzugsweise aus einem textilen Material. Das erfindungsgemäße Verfahren kann auf diese Art und Weise insbesondere auf Förderbänder mit textilen Zugträgern angewendet werden, da derartige Förderbänder aufgrund ihrer vergleichsweise geringen Dicke üblicherweise nicht zur Verwendung von Leiterschleifen, Transponder und dergleichen geeignet sind. Erfindungsgemäß kann dennoch wie zuvor beschrieben eine Überwachung derartiger Förderbandanlagen und bzw. oder derartiger Förderbänder erfolgen.

Die vorliegende Erfindung betrifft auch eine Förderbandanlage mit einem Förderband, welches ein elastomeres Material aufweist, in welches wenigstens in einer Förderrichtung verlaufende Festigkeitsträger eingebettet sind, und mit wenigstens einer Antriebstrommel, welche ausgebildet ist, das Förderband in der Förderrichtung anzutreiben, wobei die Förderbandanlage, vorzugsweise eine Steuerungseinheit der Förderbandanlage, ausgebildet ist:
- einen Leistungsbedarf der Antriebstrommel zu erfassen,
- den aktuellen Leistungsbedarf der Antriebstrommel mit einem vorbestimmten Leistungsbedarf zu vergleichen und
- bei Überschreiten eines vorbestimmten Schwellwerts die Antriebstrommel anzuhalten.

Auf diese Art und Weise können die zuvor beschriebenen Eigenschaften und Vorteile eines derartigen erfindungsgemäßen Verfahrens bei einer entsprechenden Förderbandanlage umgesetzt und angewendet werden.

Die vorliegende Erfindung betrifft auch eine Steuerungseinheit zur Durchführung eines Verfahren wie zuvor beschrieben. Hierdurch kann eine Steuerungsvorrichtung geschaffen werden, um das erfindungsgemäße Verfahren auszuführen. Eine derartige Steuerungsvorrichtung kann beispielsweise bei der zuvor beschriebenen erfindungsgemäßen Förderbandanlage verwendet werden.

Ein Ausführungsbeispiel und weitere Vorteile der Erfindung werden nachstehend im Zusammenhang mit den folgenden Figuren erläutert. Darin zeigt:

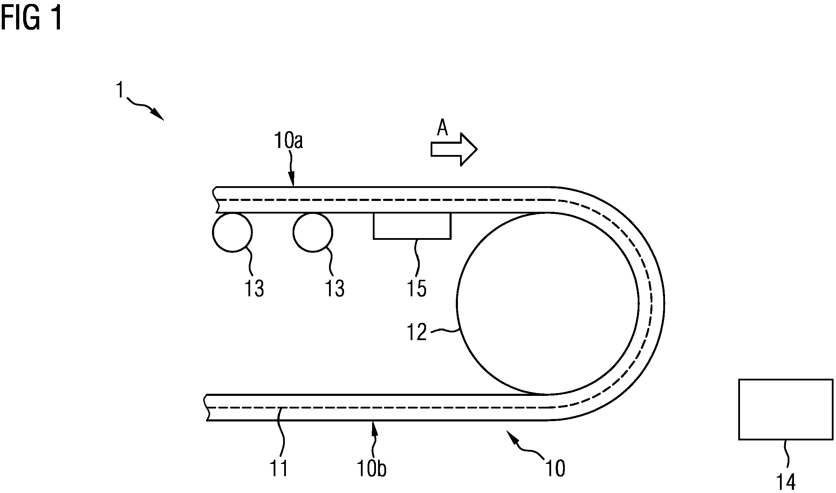

- Fig. 1: eine schematische seitliche Darstellung einer erfindungsgemäßen Förderbandanlage mit einer erfindungsgemäßen Steuerungseinheit; und

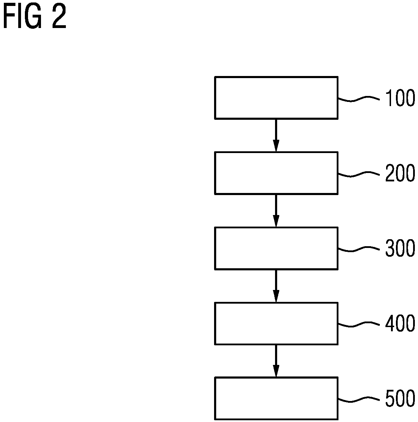

- Fig. 2: ein Ablaufdiagramm eines erfindungsgemäßen Verfahrens.

Eine erfindungsgemäße Förderbandanlage 1 weist ein Förderband 10 auf, welches in einer Förderrichtung A endlos geschlossen ist und im Wesentlichen aus einem elastomeren Material besteht, in welches Zugträger 11 als Festigkeitsträger 11 eingebettet sind. Die Zugträger 11 können Stahlseile 11 oder, wie im vorliegenden Ausflugsbeispiel betrachtet, ein Gewebe 11 sein. In jedem Fall verlaufen die Zugträger 11 in der Förderrichtung A, welche auch als Laufrichtung A oder als Bewegungsrichtung A bezeichnet werden kann. Das Förderband 10 bildet im oberen Bereich der Förderbandanlage 1 ein Obertrum 10a, auf welchem ein Fördergut (nicht dargestellt) insbesondere als loses Schüttgut transportiert werden kann, und ein Untertrum 10b, welches frei von Fördergut ist.

Das Förderband 10 wird im Bereich des Obertrums 10a von Stützrollen 13 gestützt. Das Förderband 10 läuft an seinen Enden auf der einen Seite um eine Umlenkrolle (nicht dargestellt) und auf der anderen Seite um eine Antriebstrommel 12. Ein Antrieb (nicht dargestellt) der Antriebstrommel 12 kann von einer Steuerungseinheit 14 gesteuert bzw. betrieben werden. Auch kann die Steuerungseinheit 14 der Bedarf an elektrischer Energie der Antriebstrommel 12 bzw. dessen Antriebs sensorisch erfassen oder aus anderen Größen berechnen. Es ist ferner ein Beladungssensor 15 im Bereich des Obertrums 10a angeordnet, sodass das Gewicht des Förderguts sensorisch erfasst und der Steuerungseinheit 14 zur Verfügung gestellt werden kann.

Auf der erfindungsgemäße Förderbandanlage 1 bzw. dessen erfindungsgemäßen Steuerungseinheit 14 kann ein erfindungsgemäßes Verfahren wie folgt ausgeführt werden:
Es erfolgt ein Erfassen 100 des aktuellen Leistungsbedarfs der Antriebstrommel 12 bzw. dessen Antriebs seitens der Steuerungseinheit 14. Es erfolgt ferner ein Erfassen 200 einer Beladung des Förderbandes 10 mittels des Beladungssensors 15, wobei die erfasste Beladung bzw. dessen Gewicht der Steuerungseinheit 14 zur Verfügung gestellt wird. Seitens der Steuerungseinheit 14 erfolgt nun ein Berechnen 300 des vorbestimmten Leistungsbedarfs des Antriebs der Antriebstrommel 12 durch Mittelwertbildung des vorangehenden Leistungsbedarfs, wobei hierbei die erfasste Beladung des Förderbandes 10 mit eingerechnet wird. Somit liegt in der Steuerungseinheit 14 ein erwarteter Leistungsbedarf des Antriebs der Antriebstrommel 12 vor, welcher dem Leistungsbedarf im "normalen" Betrieb der Förderbandanlage 1, d. h. ohne Beschädigungen der Stützrollen 13, der Antriebstrommel 12, des Förderbandes 10 und dergleichen, entspricht.

Nun erfolgt ein Vergleichen 400 des aktuellen Leistungsbedarfs der Antriebstrommel 12 mit einem vorbestimmten Leistungsbedarf. Dies kann durch Differenzbildung zwischen dem aktuellen Leistungsbedarf der Antriebstrommel 12 bzw. dessen Antriebs und dem vorbestimmten Leistungsbedarf erfolgen. Liegt dieser Differenzbetrag unterhalb eines vorbestimmten Schwellwertes, so entspricht der tatsächliche aktuelle Leistungsbedarf der Antriebstrommel 12 bzw. dessen Antriebs der Erwartung bei beschädigungsfreiem Betrieb und der Betrieb der Förderbandanlage 1 kann fortgesetzt werden. Überschreitet der Differenzbetrag jedoch den vorbestimmten Schwellwert, so kann aus dem erhöhten Leistungsbedarf auf eine Beschädigung der Stützrollen 13, der Antriebstrommel 12, des Förderbandes 10 und dergleichen geschlossen und diese hierdurch erfindungsgemäß erkannt werden. Als Reaktion hierauf kann ein Anhalten 500 der Antriebstrommel 12 erfolgen, um weitere Beschädigungen zu verhindern sowie um die Förderbandanlage 1 auf Beschädigungen kontrollieren zu können.

### Bezugszeichenliste (Teil der Beschreibung)

- A: Förderrichtung; Laufrichtung; Bewegungsrichtung

- 1: Förderbandanlage
- 10: Förderband
- 10a: Obertrum des Förderbands 13
- 10b: Untertrum des Förderbands 13
- 11: Zugträger; Festigkeitsträger; Stahlseile; Gewebe
- 12: Antriebstrommel
- 13: Stützrollen
- 14: Steuerungseinheit
- 15: Beladungssensor

- 100: Erfassen eines Leistungsbedarfs der Antriebstrommel 12
- 200: Erfassen einer Beladung des Förderbandes 10
- 300: Berechnen des vorbestimmten Leistungsbedarfs in Abhängigkeit der erfassten Beladung des Förderbandes 10
- 400: Vergleichen des aktuellen Leistungsbedarfs der Antriebstrommel 12 mit vorbestimmtem Leistungsbedarf
- 500: Anhalten der Antriebstrommel 12

## Patentansprüche

1. Verfahren zum Betrieb einer Förderbandanlage (1)
mit einem Förderband (10), welches ein elastomeres Material aufweist, in welches wenigstens in einer Förderrichtung (A) verlaufende Zugträger (11) eingebettet sind, und
mit wenigstens einer Antriebstrommel (12), welche ausgebildet ist, das Förderband (10) in der Förderrichtung (A) anzutreiben,
mit wenigstens den Schritten:
• Erfassen (100) eines Leistungsbedarfs der Antriebstrommel (12),
• Vergleichen (400a) des aktuellen Leistungsbedarfs der Antriebstrommel (12) mit einem vorbestimmten Leistungsbedarf und
• bei Überschreiten eines vorbestimmten Schwellwerts, Anhalten (500) der Antriebstrommel (12).

2. Verfahren nach Anspruch 1, **dadurch gekennzeichnet, dass** der vorbestimmte Leistungsbedarf ein Mittelwert des erfassten Leistungsbedarfs einer vorbestimmten unmittelbar zurückliegenden Zeitdauer ist.

3. Verfahren nach Anspruch 1, **dadurch gekennzeichnet, dass** der vorbestimmte Leistungsbedarf ein Mittelwert des erfassten Leistungsbedarfs einer vorbestimmten zeitversetzt zurückliegenden Zeitdauer ist.

4. Verfahren einem der vorangehenden Ansprüche, **dadurch gekennzeichnet, dass**
die Förderbandanlage (1) ferner einen Beladungssensor (15) aufweist, welcher ausgebildet ist, eine Beladung des Förderbandes (10) zu erfassen, das Verfahren ferner mit den Schritten:
• Erfassen (200) einer Beladung des Förderbandes (10) und
• Berechnen (300a) des vorbestimmten Leistungsbedarfs in Abhängigkeit der erfassten Beladung des Förderbandes (10).

5. Verfahren nach einem der vorangehenden Ansprüche, **dadurch gekennzeichnet, dass**
die Zugträger (11) ein textiles Material aufweisen, vorzugsweise aus einem textilen Material bestehen.

6. Förderbandanlage (1)
mit einem Förderband (10), welches ein elastomeres Material aufweist, in welches wenigstens in einer Förderrichtung (A) verlaufende Festigkeitsträger eingebettet sind, und
mit wenigstens einer Antriebstrommel (12), welche ausgebildet ist, das Förderband (10) in der Förderrichtung (A) anzutreiben,
wobei die Förderbandanlage (1), vorzugsweise eine Steuerungseinheit (14) der Förderbandanlage (1), ausgebildet ist:
• einen Leistungsbedarf der Antriebstrommel (12) zu erfassen,
• den aktuellen Leistungsbedarf der Antriebstrommel (12) mit einem vorbestimmten Leistungsbedarf zu vergleichen und
• bei Überschreiten eines vorbestimmten Schwellwerts die Antriebstrommel (12) anzuhalten.

7. Steuerungseinheit (14) zur Durchführung eines Verfahrens nach einem der Ansprüche 1 bis 5.
